(19) Europäisches Patentamt
European Patent Office
Office européen des brevets

(11) Veröffentlichungsnummer: **0 017 189**
**B1**

(12) # EUROPÄISCHE PATENTSCHRIFT

(45) Veröffentlichungstag der Patentschrift: **18.05.83**

(51) Int. Cl.³: **C 07 C 93/06,** B 01 F 17/46, C 09 B 67/46

(21) Anmeldenummer: **80101672.6**

(22) Anmeldetag: **28.03.80**

(54) **Wasserlösliche Oxalkylierungsprodukte, Verfahren zu deren Herstellung und ihre Verwendung.**

(30) Priorität: **02.04.79 DE 2913176**

(43) Veröffentlichungstag der Anmeldung:
**15.10.80 Patentblatt 80/21**

(45) Bekanntmachung des Hinweises auf die Patenterteilung:
**18.05.83 Patentblatt 83/20**

(84) Benannte Vertragsstaaten:
**BE CH DE FR GB IT NL**

(56) Entgegenhaltungen:
**DE-A-1 694 119**
**DE-A-2 152 076**
**DE-A-2 603 666**
**DE-A-2 730 223**
**US-A-2 819 222**
**US-A-3 496 138**

(73) Patentinhaber: **HOECHST AKTIENGESELLSCHAFT, Postfach 80 03 20, D-6230 Frankfurt/Main 80 (DE)**

(72) Erfinder: **Diery, Helmut, Dr., Theresenstrasse 45, D-6233 Kelkheim (Taunus) (DE)**
Erfinder: **Hemmerling, Volker, Rauracher Strasse 42, CH-4215 Riehen (CH)**

**EP 0 017 189 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Wasserlösliche Oxalkylierungsprodukte, Verfahren zu deren Herstellung und ihre Verwendung

In der DE-A-2 152 076 werden bereits Verbindungen beschrieben, die erhalten werden durch Addition von Dialkylaminen an den Diglycidyläther von Bis-phenol A und anschliessende Oxalkylierung. Die so erhaltenen Verbindungen werden jedoch ausschliesslich als Weichmacher für Textilmaterial eingesetzt.

Gegenstand der Erfindung sind wasserlösliche Oxalkylierungsprodukte der Formel I

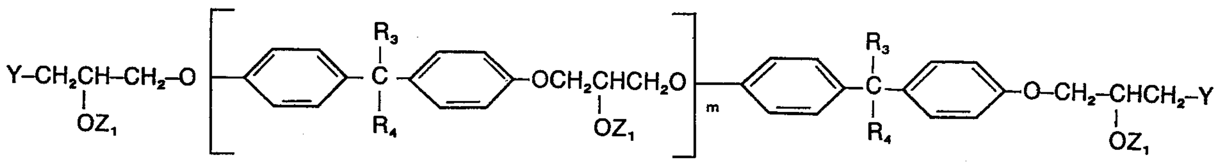 (1)

wobei Y eine Gruppe der Formeln

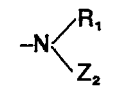 oder 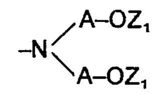

$R_1$ einen gesättigten oder ungesättigten geradkettigen oder verzweigten $C_1$–$C_{24}$-Alkylrest oder $C_1$–$C_{24}$-Alkoxypropylrest, A eine geradkettige oder verzweigte $C_2$–$C_4$-Alkylengruppe, $Z_1$ und $Z_2$ gleich oder verschieden sind und Reste der Formel $-(CH_2-\underset{R_2}{CHO})_xH$ bedeuten, worin $R_2$ Wasserstoff oder Methyl und x eine Zahl bis 150 ist, $R_3$ und $R_4$ Wasserstoff oder $C_1$–$C_4$-Alkyl und m eine Zahl von 0 bis 12 bedeutet.

Diese Verbindungen werden hergestellt nach an sich bekannten Verfahren, indem man eine Verbindung der Formel

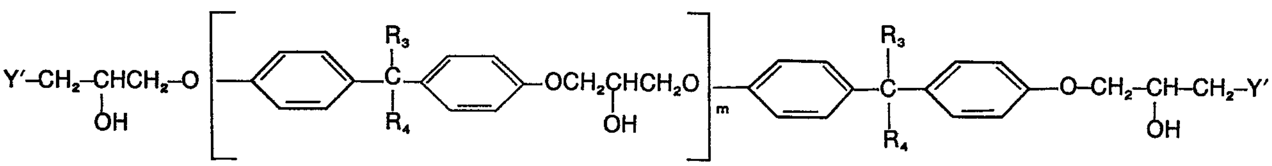

wobei Y' eine Gruppe der Formeln

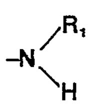 bzw. 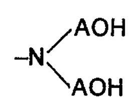

bedeutet, oxalkyliert.

Als Ausgangsverbindungen eignen sich die bekannten Epoxidharze, soweit sie endständige Glycidyläthergruppen enthalten, die durch Umsetzung von p,p'-Dihydroxydiphenylmethan, p,p'-Dihydroxydiphenylpropan, p,p'-Dihydroxydiphenylbutan mit Epichlorhydrin nach bekannten Methoden hergestellt werden. Es kommen auch höhere Epoxidharze in Frage, wie sie beispielsweise durch Umsetzung eines der oben erwähnten Bisphenole mit unterstöchiometrischen Mengen an Epichlorhydrin erhalten werden.

Diese Epoxide werden mit den Aminen in einem inerten organischen Lösungsmittel wie etwa Methanol oder Chlorbenzol bei Temperaturen von ca. 60–120°C umgesetzt (s. US-A-2 819 222 und DE-A-1 694 119). Die Reaktion kann aber auch ohne Lösungsmittel durch Zugabe des Epoxids zum vorgelegten Amin bei Temperaturen von ca. 100–150°C erfolgen.

Als primäre $C_1$–$C_{24}$-Alkylamine eignen sich z.B. Methylamin, n- oder i-Butylamin, n-Hexylamin, n-Octylamin, 2-Ethylhexylamin, i-Nonylamin, n-Decylamin, n-Dodecylamin, Cocosfettamin, Isotridecylamin, n-Hexadecylamin, n-Octadecylamin, Talgfettamin, Oleylamin, Eicosyl-/Cocosylamin, 3-Butoxypropylamin, 3-Isononyloxypropylamin, 3-n-Hexadecyloxypropylamin sowie als Dialkanolamine Diethanolamin, Di-isopropanolamin und Diiso-butanolamin.

Durch diese Reaktion erhält man zunächst das Produkt der Formel 5, das dann nach an sich bekannten Methoden mit Kaliumhydroxid oder bevorzugt mit Natriumhydroxid oder Natriummethylat als Katalysator bei Temperaturen von ca. 160–200°C oxalkyliert wird.

Die Oxalkylierung kann mit Ethylenoxid zu Produkten allein mit Polyethylenoxid-Ketten durchgeführt werden, man kann aber auch zunächst mit Propylenoxid eine Polypropylenoxidkette und anschliessend bis zur Erzielung der Wasserlöslichkeit mit Ethylenoxid einen Polyethylenoxidrest einführen. Ausser der Blockpolymerisation, bei der zunächst Propylenoxid und dann Ethylenoxid oder umgekehrt eingeführt werden, lassen sich die erfindungsgemässen Verbindungen aber auch in einer Mischoxalkylierung durch Oxalkylierung mit einer Mischung aus Ethylenoxid/Propylenoxid herstellen. Die Oxalkylierung kann drucklos oder in Druckgefässen durchgeführt werden, wobei Ethylenoxid gasförmig oder flüssig zugeführt werden kann. Der bevorzugte Arbeitsdruck beträgt 2–8 bar. Die Menge an Ethylenoxid, insbesondere die untere Grenze für den Wert x, wird so bemessen, dass in Wasser lösliche Verbindungen anfallen.

Die so erhaltenen Verbindungen der Formel 1 eignen sich hervorragend als Dispergiermittel für

die Herstellung von Dispersionen von Pigmenten, Farbstoffen und optischen Aufhellern sowie für die Formulierung von Pflanzenschutz- und Schädlingsbekämpfungsmitteln.

Diese Verbindungen können dabei allein oder in Kombination mit anderen tensidischen Verbindungen, anderen Zusatz- und Hilfsstoffen in den Formulierungen angewandt werden. Die wasserfreien erfindungsgemässen Dispergiermittel sind in jedem Verhältnis mit Wasser bzw. Wasser/Alkohol-Gemischen verdünnbar und eignen sich dadurch besonders gut zur Herstellung von hochkonzentrierten, fliessfähigen Dispersionen organischer und anorganischer Pigmente.

Die Herstellung solcher Pigmentdispersionen erfolgt in an sich bekannter Weise, indem man die Pigmente, wie z.B. Azopigmente, verlackte Azopigmente, Triphenylmethanpigmente, Thioindigopigmente, Perylentetracarbonsäurepigmente, Dioxazinpigmente, Chinacridonpigmente, Phthalocyaninpigmente oder anorganische Pigmente, mit den erfindungsgemässen Verbindungen unter Zusatz von Äthylenglykol, Wasser und gegebenenfalls geringen Mengen anderer Dispergiermittel in einer geeigneten Dispergiervorrichtung, wie zum Beispiel einer Rührwerksmühle oder einem Doppelmuldenkneter, dispergiert. Zur Herstellung im Kneter verfährt man in der Weise, dass man die erfindungsgemässen Dispergiermittel und wenig Wasser im Kneter vorlegt, die Pigmente portionsweise einträgt, gegebenenfalls unter Zusatz von geringen Mengen anderer Dispergiermittel und bei zäher Konsistenz knetet. Nach erfolgter Feinverteilung wird unter Zugabe von z.B. Äthylenglykol und Wasser auf die gewünschte Farbstärke und Konsistenz verdünnt. Beim Einsatz einer Rührwerksmühle werden die Pigmente in einem Gemisch aus den oben beschriebenen Verteilungsmitteln, Ethylenglykol und Wasser, eventuell geringer Mengen anderer Verteilungsmittel, durch Verrühren zu einem Teig homogenisiert. Diese pumpfähige Suspension wird dann im allgemeinen in einer kontinuierlichen Rührwerksmühle mit Quarzitperlen von ca. 1 mm ø in eventuell mehreren Durchgängen bis zur gewünschten Feinheit gemahlen. Anschliessend kann mit Wasser oder z.B. Ethylenglykol als Wasserrückhaltemittel auf die gewünschte Farbstärke eingestellt werden. Das Verhältnis von Dispergiermittel zu Pigmentpulver kann in weiten Grenzen variieren und beträgt im allgemeinen 0,1 bis 0,2 Gewichtsteile Dispergiermittel auf ein Teil trockenes Pigmentpulver.

Die so erhaltenen Pigmentdispersionen eignen sich zum Einfärben von Dispersionsfarben für Innen- und Aussenanstriche, für den Einsatz im textilen Pigmentdruck oder für den Einsatz in wässrigen Flexo- bzw. Tiefdruckfarben, besonders in Verbindung mit Alkoholzusätzen. Die hervorragenden Netz- und Dispergiereigenschaften der beschriebenen Dispergiermittel machen sich besonders durch niedrige Einsatzmengen, bezogen auf die Pigmentgehalte in den Dispersionen, bemerkbar. Helle und brillante Farbtöne werden beim Flexo- und Tiefdruck durch die geringe Eigenfärbung der beanspruchten Dispergiermittel nicht beeinträchtigt.

Beispiele

Herstellung der Verbindungen 1 bis 12 «ti-,» bedeutet in allen Fällen «Innentemperatur»

Beispiel 1

In einem 4-Hals-Schliffkolben mit Rückflusskühler, Innenthermometer, Rührung und Tropftrichter werden 268 g destilliertes Talgfettamin (Zusammensetzung 31% $C_{16}$ / 35% $C_{18}$ / 30% $C_{18=}$ / 4% $C_{12}/_{14}$) (bas. N 5,21%, Gebr. Mol 268) und 500 ml Methanol vorgelegt. Bei ti = 45 °C werden innerhalb von ca. 30 Minuten 189 g eines im Handel erhältlichen Diglycidylethers von 2,2-Bis-[p-hydroxyphenyl]-propan (Epoxidzahl 193, Gebr. Mol 378) zugesetzt. Anschliessend wird das Reaktionsgemisch 4 Stunden bei ti = 65 °C gerührt und das Methanol am Rotationsverdampfer abdestilliert. Das Reaktionsprodukt ist eine gelbstichige feste Paste mit einem bas. N 3,10/3,11, Gebr. Mol 902.

225,2 g des erhaltenen Additionsproduktes werden in Gegenwart von 2 g pulv. Ätznatron mit 228 g Ethylenoxid bei 180 °C im Verlauf von 12 Stunden oxethyliert. Das flüssige Endprodukt zeigt einen Trübungspunkt von 57 °C (in Wasser DIN 53 917) und enthält auf ein Mol bezogen 20,6 Mol Ethylenoxid.

Das Additionsprodukt aus Talgfettamin und dem Diglycidylether lässt sich auch in der Schmelze herstellen, wenn das Talgfettamin vorgelegt und auf ti = 150 °C erwärmt wird. Dann wird anschliessend bei dieser Temperatur der auf 50 °C vorerwärmte Diglycidylether innerhalb von ca. 1 Stunde zugetropft und noch 1½ Stunden nachgerührt.

Beispiel 2

Zu 90,2 g (0,1 Mol) des Additionsproduktes aus 2 Mol Talgfettamin und 1 Mol des Diglycidylethers von 2,2-Bis-[p-hydroxy-phenyl]-propan werden, wie in Beispiel 1 beschrieben, in Gegenwart von 0,5 g pulv. Ätznatron innerhalb von 15 Stunden bei 170–190 °C 105 g Propylenoxid zugetropft. Das erhaltene Polyoxypropylat stellt eine braune, mittelviskose Flüssigkeit mit 18,8 Mol Propylenoxid dar und wird mit Ethylenoxid weiter umgesetzt. Nach Zusatz von 1 g pulv. Ätznatron werden innerhalb von 7 Stunden bei ti = 180 °C 72 g Ethylenoxid angelagert. Die braune, mittelviskose Flüssigkeit weist einen Trübungspunkt von 38 °C (in Wasser) bzw. 79 °C (in Butyldiglykol) nach DIN 53 917 auf.

Beispiel 3

Zu 419 g (0,46 Mol) eines wie in Beispiel 1 hergestellten Additionsproduktes aus 2 Mol destilliertem Talgfettamin und dem Diglycidylether von 2,2-Bis-[p-hydroxy-phenyl]-propan werden 2,2 g pulv. Ätznatron gegeben. Die Oxethylierung wird mit 451 g Ethylenoxid bei 140–160 °C unter Druck innerhalb von 4 Stunden durchgeführt. Das flüssige Reaktionsprodukt zeigt einen Trübungspunkt von 61,3 °C (in Wasser) und enthält auf das Mol bezogen 22,3 Mol Ethylenoxid.

Beispiel 4

370 g Dodecylamin dest. (2 Mol) mit 98% $C_{12}$-Alkyl (bas. N 7,53/7,55%) werden in 1000 ml Methanol gelöst, und bei ti = 45 °C werden innerhalb 15 Minuten 378 g eines Diglycidylethers von 2,2-Bis-[p-hydroxy-phenyl]-propan (Epoxidzahl 193; Gebr. Mol 378) zugegeben. Nach 4stündigem Rühren bei 65 °C wird das Methanol abdestilliert. Das helle Reaktionsprodukt erstarrt beim Abkühlen wachsartig fest (bas. N 3,70/3,69; Gebr. Mol 758).

303,2 g (0,4 Mol) dieses Reaktionsproduktes werden in Gegenwart von 1,5 g pulv. Ätznatron bei ti = 180 °C mit 443 g Propylenoxid innerhalb von 22 Stunden umgesetzt, wobei nach etwa der Hälfte der Reaktionszeit nochmals 1,5 g pulv. Ätznatron zugegeben werden.

93,3 g dieser oxpropylierten Verbindung werden bei 180–190 °C durch Einleiten von 88 g Ethylenoxid zu einem flüssigen, wasserlöslichen Produkt oxethyliert. Es weist nach DIN 53 917 einen Trübungspunkt von 78 °C (in Butyldiglykol) auf.

Beispiel 4a

Werden 93,3 g der in Beispiel 4 beschriebenen oxpropylierten Verbindung analog mit 173,5 g Ethylenoxid umgesetzt, so wird eine klar wasserlösliche Paste mit dem Trübungspunkt 93 °C (in BDG nach DIN 53 917) erhalten.

Beispiel 5

Wird anstelle des Dodecylamins in Beispiel 4 das Cocosfettamin (bas. N 7,08/7,11%) eingesetzt, so erhält man ein Di-Additionsprodukt an den Diglycidylether von 2,2-Bis-[p-hydroxy-phenyl]-propan als wachsartige Verbindung mit einem bas. N 3,54/3,56% und einem Gebrauchs-Mol 789. Von dieser Verbindung werden 315,6 g in Gegenwart von 1 g pulv. Ätznatron bei 180–200 °C mit 441 g PO oxpropyliert, wobei eine mittelviskose Flüssigkeit erhalten wird. 378,4 g der oxpropylierten Verbindung werden in Gegenwart von Ätznatron bei 190 °C mit 375 g Ethylenoxid zum klar wasserlöslichen Dispergiermittel umgesetzt.

Trübungspunkt in Wasser 78,0 °C

Trübungspunkt in BDG 90,0 °C DIN 53 917.

Die Additionsverbindung aus Cocosfettamin und dem Diglycidylether kann auch in Abwesenheit eines Lösungsmittels hergestellt werden, wenn beispielsweise 788 g Cocosfettamin dest. (51% $C_{12}$, 19% $C_{14}$, 13% $C_{8/10}$, 17% $C_{16/18}$) vorgelegt und auf 120 °C erwärmt werden. Dann lässt man 740 g des Diglycidylethers innerhalb von 20 Minuten zutropfen (Wasserkühlung), wobei die Temperatur auf 150 °C ansteigt. Das Reaktionsgemisch wird anschliessend 1 Stunde bei 120 °C nachgerührt.

Beispiel 6

Das Additionsprodukt von 2 Mol Di-ethanolamin an 1 Mol Diglycidylether von 2,2-Bis-[p-hydroxy-phenyl]-propan, das hergestellt wird durch Zugabe des Diglycidylethers zum vorgelegten Di-Ethanolamin bei ti = 120 °C innerhalb von 30 Minuten und durch 2stündiges Nachrühren bei 140 °C, wird oxalkyliert. Zu diesem Zweck werden zu 127,2 g Additionsprodukt (0,2 Gebr. Mol) in Gegenwart von 2 g pulv. Ätznatron unter $N_2$-Überlagerung bei ti = 190–205 °C 1033 g Propylenoxid angelagert. Die sich anschliessende Oxethylierung erfolgt mit 174,0 g der oxpropylierten Verbindung durch Anlagerung von 318 g Ethylenoxid. Das Endprodukt stellt eine wasserlösliche Paste mit dem Trübungspunkt 87,5 °C (in Wasser) und 94,5 °C (in BDG) dar.

Beispiel 7

258 g (2 Mol) 2-Ethylhexylamin werden auf ti = 90 °C erwärmt. Dazu lässt man innerhalb von 20 Minuten 370 g (1 Mol) Diglycidylether von 2,2-Bis[p-hydroxy-phenyl]-propan zulaufen, wobei sich das Reaktionsgemisch auf ti = 100 °C erwärmt. Anschliessend wird 90 Minuten bei ti = 110 °C nachgerührt. Gebr. Mol 634. 253,6 g der Additionsverbindung werden in Gegenwart von 2 g pulv. Ätznatron bei 190–210 °C mit 597 g Propylenoxid umgesetzt. Die Verbindung enthält 26,6 Mol PO/Mol Produkt. 212,6 g des Propylenoxid-Umsetzungsproduktes werden anschliessend bei 180–195 °C mit 345 g Ethylenoxid zur wasserlöslichen grenzflächenaktiven Verbindung umgesetzt. Trübungspunkt 90,5 °C (in BDG) und 83,5 °C (in $H_2O$).

Beispiel 8

Das Additionsprodukt aus 2 Mol N-Methyl-ethanolamin und 1 Mol Diglycidylether von 2,2-Bis-[p-hydroxy-phenyl]-propan, das durch Zugabe des Diglycidylethers zum vorgelegten N-Methyl-ethanolamin bei 130–150 °C mit 2stündigem Nachrühren bei 140 °C hergestellt worden war, stellt ein bernsteinfarbiges blankes Harz dar. Davon werden 260 g (0,5 Mol) in Anwesenheit von 2 g pulv. Ätznatron bei 190–195 °C mit 1678 g Propylenoxid umgesetzt. Von diesem Reaktionsprodukt werden anschliessend 387,6 g bei 190 °C mit 674 g Ethylenoxid zur Reaktion gebracht. Das wachsartig erstarrte, wasserlösliche Endprodukt zeigt einen Trübungspunkt von 88,0 °C (in Wasser) und 90,5 °C (in BDG).

Beispiel 9

254,6 g (1 Mol) eines destillierten Talgfettamins werden in 500 ml Chlorbenzol gelöst. Dann lässt man eine Lösung von 936 g (0,5 Mol) einer Verbindung der folgenden Formel

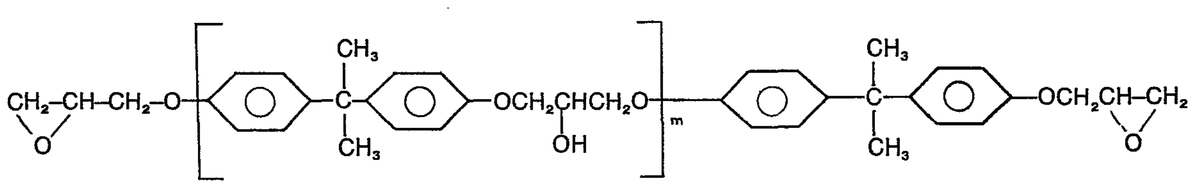

m = 5–6

gelöst in 1424 g Chlorbenzol, innerhalb von ca. 10 Minuten bei 45 °C zulaufen und rührt den Reaktionsansatz 3½ Stunden bei 70 °C. Nach dem Abdestillieren des Chlorbenzols wird ein sprödes Harz erhalten, das einen bas. N von 1,13% aufweist. Von diesem Reaktionsprodukt werden 476,4 g (0,2 Mol) mit 1,5 g pulv. Ätznatron versetzt und bei 170–190 °C mit 326 g Propylenoxid umgesetzt. Man erhält ein blankes, viskoses Produkt. Davon werden 200,5 g (0,05 Mol) weiter mit 146 g Ethylenoxid zur Reaktion gebracht. Die mittelviskose, wasserlösliche Verbindung weist einen Trübungspunkt von 30,4 °C (in Wasser) auf.

Beispiel 10

Analog Beispiel 9 werden zunächst in Chlorbenzol als Lösungsmittel 204 g (0,8 Mol) eines destillierten Talgfettamins mit 1168 g (0,4 Mol) eines kondensierten Epoxidharzes der Formel 2 mit $R_3$ und $R_4 = CH_3$ und $m = 12$ umgesetzt. Man erhält eine harzartige, spröde Festsubstanz. 686 g (0,2 Mol) dieser Verbindung werden in Gegenwart von 1 g pulverisiertem Ätznatron bei 180–210 °C mit 672 g (12 Mol) Propylenoxid umgesetzt. Von der erhaltenen viskosen Verbindung werden 339,5 g (0,05 Mol) bei 190–200 °C mit 0,5 g pulv. Ätznatron und 246 g Ethylenoxid zur Reaktion gebracht. Das Umsetzungsprodukt ist wasserlöslich und weist einen Trübungspunkt von 36,9 °C (in Wasser) und 68,5 °C (in BDG) nach DIN 53 917 auf.

Beispiel 11

522 g (2 Mol) destilliertes Talgfettamin werden auf ti = 150 °C erhitzt. Dann werden bei 145–155 °C innerhalb von ca. 1½ Stunden 936 g (1 Mol) eines Epoxidharzes der Formel 2 mit $R_3$ und $R_4 = CH_3$ und $m = 2{,}4$ eingetragen. Das Reaktionsgemisch wird 1 Stunde bei 150 °C nachgerührt. 291,6 g (0,2 Mol) des erhaltenen Harzes werden mit 1 g pulv. Ätznatron versetzt und mit 428 g Propylenoxid bei 180–220 °C umgesetzt.

360 g (0,1 Mol) der oxpropylierten Verbindung werden anschliessend mit 280 g Ethylenoxid bei 190–195 °C zum wasserlöslichen Reaktionsprodukt oxethyliert. Trübungspunkt 34 °C (in Wasser) und 72,0 °C (in BDG) nach DIN 53 917.

Beispiel 12

510 g (2 Mol) Talgfettamin, destilliert (Zusammensetzung wie in Beispiel 1 beschrieben), werden in 1000 ml Methanol gelöst. Bei ti = 45 °C werden 352 g (1 Mol) Diglycidylether des Bis-[p-hydroxy-phenyl]-methans (Epoxidzahl 207/208) zugesetzt. Anschliessend wird 4 Stunden bei 65 °C gerührt und das Methanol anschliessend abgedampft. Das Reaktionsprodukt erstarrt wachsartig.

305,2 g dieses Reaktionsproduktes werden in Gegenwart von 2 g Ätznatron bei 190 °C mit 323 g Ethylenoxid umgesetzt. Das wasserlösliche Reaktionsprodukt zeigt einen Trübungspunkt von 60,4 °C (in Wasser) bzw. 86,5 °C (in BDG) nach DIN 53 917.

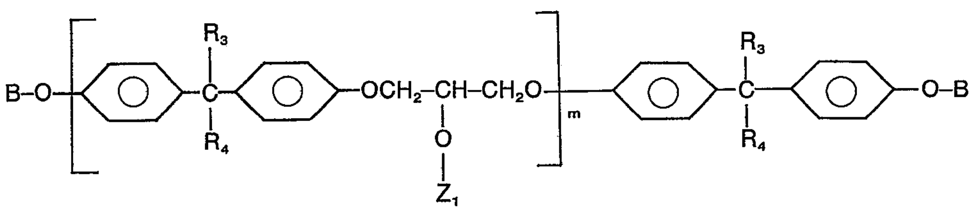

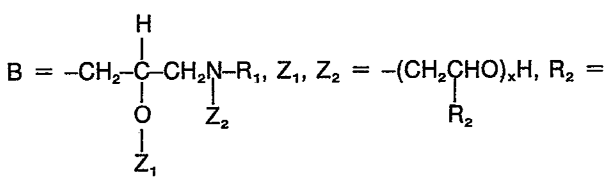, $R_2$ = H oder $CH_3$

| Verbindung Nr. | $R_1$ | $R_3$ | $R_4$ | m | Mol Alkylenoxid pro Mol Endprodukt $\Sigma Z_1 + Z_2$ | | Trübungspunkt nach DIN 53917 | |
|---|---|---|---|---|---|---|---|---|
| 1 | Talgfettalkyl | $-CH_3$ | $-CH_3$ | O | EO | 20,6 | 57 °C | (in $H_2O$) |
| 2 | Talgfettalkyl | $-CH_3$ | $-CH_3$ | O | PO | 18,8 | 38 °C | (in $H_2O$) |
| | | | | | EO | 35,6 | 79 °C | (in BDG) |
| 3 | Talgfettalkyl | $-CH_3$ | $-CH_3$ | O | EO | 22,3 | 61,3 °C | (in $H_2O$) |
| 4 | Dodecyl | $-CH_3$ | $-CH_3$ | O | PO | 19,8 | 78 °C | (in BDG) |
| | | | | | EO | 40,0 | | |
| 4a | Dodecyl | $-CH_3$ | $-CH_3$ | O | PO | 19,8 | 93 °C | (in BDG) |
| | | | | | EO | 78,8 | | |

(Fortsetzung)

| Verbindung Nr. | $R_1$ | $R_3$ | $R_4$ | m | Mol Alkylenoxid pro Mol Endprodukt $\Sigma Z_1 + Z_2$ | | Trübungspunkt nach DIN 53917 | |
|---|---|---|---|---|---|---|---|---|
| 5 | Cocosfettalkyl | $-CH_3$ | $-CH_3$ | O | PO | 19,7 | 78,0°C | (in $H_2O$) |
| | | | | | EO | 42,6 | 90,0°C | (in BDG) |
| 7 | 2-Ethyl-hexyl | $-CH_3$ | $-CH_3$ | O | PO | 26,6 | 90,5°C | (in BDG) |
| | | | | | EO | 78,4 | 83,5°C | (in $H_2O$) |
| 8 | $-CH_3$ | $-CH_3$ | $-CH_3$ | O | PO | 60 | 88°C | (in $H_2O$) |
| | | | | | EO | 153,2 | 90,5°C | (in BDG) |
| 9 | Talgfettalkyl | $-CH_3$ | $-CH_3$ | 5–6 | PO | 29,1 | 30,4°C | (in $H_2O$) |
| | | | | | EO | 66,4 | | |
| 10 | Talgfettalkyl | $-CH_3$ | $-CH_3$ | ~12 | PO | 60 | 36,9°C | (in $H_2O$) |
| | | | | | EO | 112 | 68,5°C | (in BDG) |
| 11 | Talgfettalkyl | $-CH_3$ | $-CH_3$ | ~2,4 | PO | 38,2 | 34°C | (in $H_2O$) |
| | | | | | EO | 63,6 | 72,0°C | (in BDG) |
| 12 | Talgfettalkyl | H | H | O | EO | 21 | 60,4°C | (in $H_2O$) |
| | | | | | | | 86,5°C | (in BDG) |

Anwendungsbeispiele

Anwendungsbeispiel 1

288 Gew.-Teile Pigment Red 14 (Colour Index Number 12 380) werden mit 54 Gew.-Teilen der Verbindung aus Beispiel 2 und ca. 80 Gew.-Teilen Wasser in einem Doppelmuldenkneter etwa 30 Minuten zäh geknetet. Nach erfolgter Feinverteilung wird durch Zugabe von weiteren 118 Gew.-Teilen Wasser und 60 Gew.-Teilen Ethylenglykol verdünnt. Die 48 Gewichtsprozent enthaltende Pigmentpräparation ist dünnflüssig und lagerstabil; sie eignet sich hervorragend zum Anfärben von wässrigen Anstrichfarben und für den Einsatz in wässrigen Flexo- bzw. Tiefdruckfarben.

Anwendungsbeispiel 2

Setzt man im Anwendungsbeispiel 1 anstelle der Verbindung aus Beispiel 2 72 Gew.-Teile der Verbindung aus Beispiel 6 ein, so erhält man eine Pigmentpräparation mit gleich guten anwendungstechnischen Eigenschaften.

Anwendungsbeispiel 3

Setzt man im Anwendungsbeispiel 1 anstelle der Verbindung aus Beispiel 2 72 Gew.-Teile der Verbindung aus Beispiel 9 ein, so erhält man eine Pigmentpräparation mit gleich guten anwendungstechnischen Eigenschaften.

Anwendungsbeispiel 4

Setzt man im Anwendungsbeispiel 1 anstelle der Verbindung 2 78 Gew.-Teile der Verbindung aus Beispiel 11 ein, so erhält man eine Pigmentpräparation mit gleich guten anwendungstechnischen Eigenschaften.

Anwendungsbeispiel 5

90 Gew.-Teile eines Cu-Phthalocyaninpigments (Pigment-Blue 15, Colour Index Number 74 160) werden mit 20 Gew.-Teilen der Verbindung aus Beispiel 4a und 70 Gew.-Teilen Wasser unter Zusatz von ca. 700 Gew.-Teilen Quarzitperlen (1–2 mm ø) als Mahlkörper ca. 1 Stunde in einer 1 1-Rührwerksmühle gemahlen. Nach Beendigung der Mahlung werden dem Mahlgut noch 20 Gew.-Teile Äthylenglykol zugesetzt und die 45 Gew.-% Pigment enthaltende dünnflüssige Pigmentdispersion wird über ein Sieb von den Mahlkörpern abgetrennt. Sie eignet sich hervorragend für den Einsatz in wässrigen Flexo- bzw. Tiefdruckfarben.

Anwendungsbeispiel 6

Eine entsprechend gute Pigmentdispersion erhält man, wenn man die Verbindung aus Beispiel 4a im Anwendungsbeispiel 5 durch 24 Gew.-Teile der Verbindung aus Beispiel 5 ersetzt.

Anwendungsbeispiel 7

Eine entsprechend gute Pigmentdispersion erhält man, wenn man die Verbindung aus Beispiel 4a im Anwendungsbeispiel 5 durch 28 Gew.-Teile der Verbindung aus Beispiel 8 ersetzt.

Anwendungsbeispiel 8

250 Gew.-Teile eines durch Mischkupplung von diazotiertem 3,3'-Dichlorbenzidin auf Acetessiganilid und Acetessig-p-ansidid im Verhältnis 9:1 erhaltenen Pigments werden mit 50 Gew.-Teilen der Verbindung aus Beispiel 1 und ca. 65 Gew.-Teilen Wasser in einem Doppelmuldenkneter ca. 2 Stunden zäh geknetet. Nach erfolgter Feinverteilung wird mit 50 Gew.-Teilen Ethylenglykol und 135 Gew.-Teilen Wasser auf einen Pigmentgehalt von 50% verdünnt. Die erhaltene dünnflüssige Pigmentpräparation lässt sich in jedem Verhältnis mit Wasser bzw. wasserhaltigen Bindemittelsystemen verdünnen.

Anwendungsbeispiel 9

Setzt man im Anwendungsbeispiel 8 anstelle der Verbindung aus Beispiel 1 60 Gew.-Teile der Verbindung aus Beispiel 7 ein, so erhält man eine

Pigmentdispersion mit gleich guten anwendungstechnischen Eigenschaften.

Anwendungsbeispiel 10

Ersetzt man im Anwendungsbeispiel 8 die Verbindung aus Beispiel 1 durch 60 Gew.-Teile der Verbindung aus Beispiel 10, so erhält man eine Pigmentdispersion mit den gleichen Eigenschaften.

Anwendungsbeispiel 11

90 Gew.-Teile Pigment Red 147 (Colour Index Number 12 433) werden mit 20 Gew.-Teilen der Verbindung aus Beispiel 3 und ca. 30 Gew.-Teilen Wasser in einem Doppelmuldenkneter etwa 30 Minuten zäh geknetet. Nach erfolgter Feinverteilung wird durch Zugabe von 80 Gew.-Teilen Wasser und 20 Gew.-Teilen Ethylenglykol verdünnt. Die 45 Gewichtsprozent enthaltende Pigmentpräparation ist fliessfähig und eignet sich hervorragend für den Einsatz in wässrigen Flexodruckfarben.

Anwendungsbeispiel 12

Ersetzt man im Anwendungsbeispiel 11 die Verbindung aus Beispiel 3 durch 20 Gew.-Teile der Verbindung aus Beispiel 12, so erhält man eine gleich gute Pigmentdispersion.

**Patentansprüche**

1. Wasserlösliche Oxalkylierungsprodukte der Formel 1

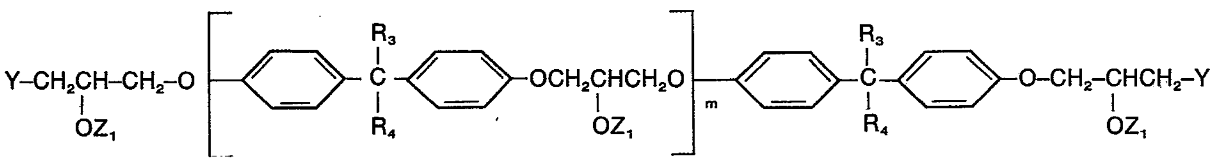 (1)

wobei Y eine Gruppe der Formeln

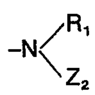 oder 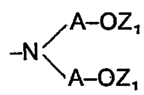

$R_1$ einen gesättigten oder ungesättigten geradkettigen oder verzweigten $C_1$–$C_{24}$-Alkylrest oder $C_1$–$C_{24}$-Alkoxypropylrest, A eine geradkettige oder verzweigte $C_2$–$C_4$-Alkylengruppe, $Z_1$ und $Z_2$ gleich oder verschieden sind und Reste der Formel $-(CH_2\underset{R_2}{\underset{|}{C}}HO)_xH$ bedeuten, worin $R_2$ Wasserstoff oder Methyl und x eine Zahl bis 150 ist, $R_3$ und $R_4$ Wasserstoff oder $C_1$–$C_4$-Alkyl und m eine Zahl von 0 bis 12 bedeutet.

2. Verfahren zur Herstellung der Verbindung nach Anspruch 1, dadurch gekennzeichnet, dass man eine Verbindung der Formel

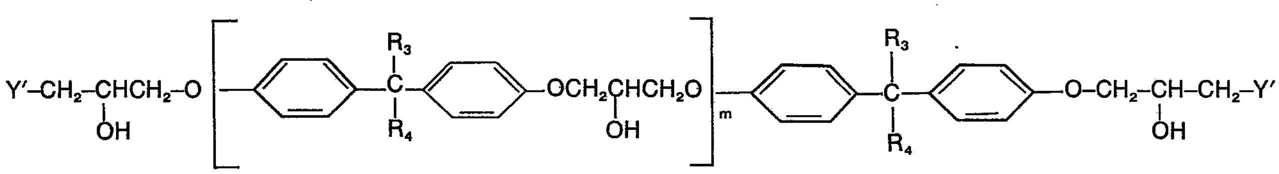

wobei Y′ eine Gruppe der Formel

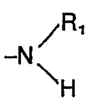 bzw. 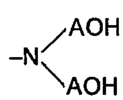

bedeutet, in an sich bekannter Weise oxalkyliert.

3. Verwendung der Verbindungen gemäss Anspruch 1 als Dispergiermittel.

4. Verwendung der Verbindungen gemäss Anspruch 1 zur Herstellung von wässrigen Pigmentdispersionen.

5. Dispersionen von Pigmenten, Farbstoffen, optischen Aufhellern, Pflanzenschutz- und Schädlingsbekämpfungsmitteln gekennzeichnet durch den Gehalt an einer Verbindung der Formel 1 nach Anspruch 1.

**Claims**

1. Watersoluble oxalkylation products of the formula 1

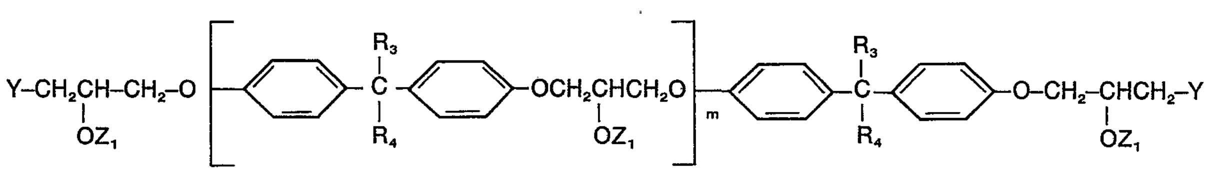 (1)

in which Y is a group of the formula

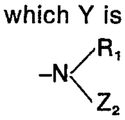 or 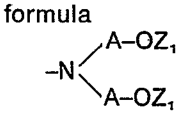

$R_1$ denotes linear or branched $C_1$–$C_{24}$alkyl, $C_1$–$C_{24}$alkenyl or $C_1$–$C_{24}$-alkoxypropyl, A denotes linear or branched $C_2$–$C_4$alkylene, $Z^1$ and $Z^2$, which are identical or different, denote radicals of the

formula $-(CH_2\underset{R_2}{C}HO)_xH$ in which $R_2$ is hydrogen or methyl and x is an integer of up to 150, $R^3$ and $R^4$ denote hydrogen or $C_1$–$C_4$alkyl and m is zero or an integer from 0 to 12.

2. The process for the manufacture of a compound as claimed in claim 1, which comprises oxalkylating according to known methods a compound of the formula

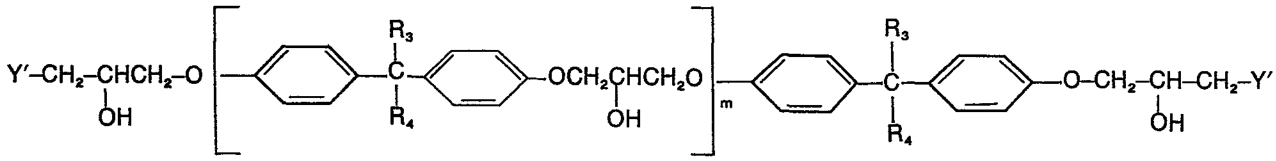

in which Y′ denotes a group of the formula

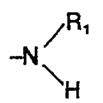
or
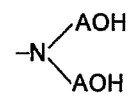

3. Method of use of the compounds according to claim 1 as dispersing agents.

4. Method of use of the compounds according to claim 1 for the preparation of aqueous pigment dispersions.

5. Dispersions of pigments, dyestuffs, optical brighteners, plant protecting agents and pest combating agents characterized by a content of a compound according to formula 1 of claim 1.

**Revendications**

1. Produits d'alcoxylation hydrosolubles qui répondent à la formule 1

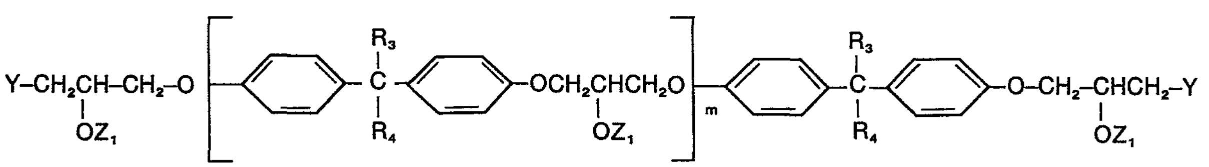
(1)

dans laquelle Y représente un radical répondant à l'une des formules:

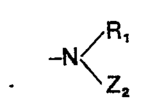
et
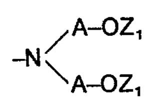

$R_1$ représente un alkyle en $C_1$–$C_{24}$ saturé ou non, linéaire ou ramifié, ou un alcoxypropyle dont l'alcoxy contient de 1 à 24 atomes de carbone, A représente un alkylène en $C_2$–$C_4$ linéaire ou ramifié, $Z_1$ et $Z_2$, qui sont identiques ou différents, représentent chacun un radical $-(CH_2\underset{R_2}{C}HO)_xH$ dans lequel $R_2$ représente l'hydrogène ou un méthyle et x un nombre pouvant aller jusqu'à 150, $R_3$ et $R_4$ représentent chacun l'hydrogène ou un alkyle en $C_1$–$C_4$, et m désigne un nombre de 0 à 12.

2. Procédé de préparation d'un composé selon la revendication 1, procédé caractérisé en ce qu'on alcoxyle, de manière connue, un composé répondant à la formule:

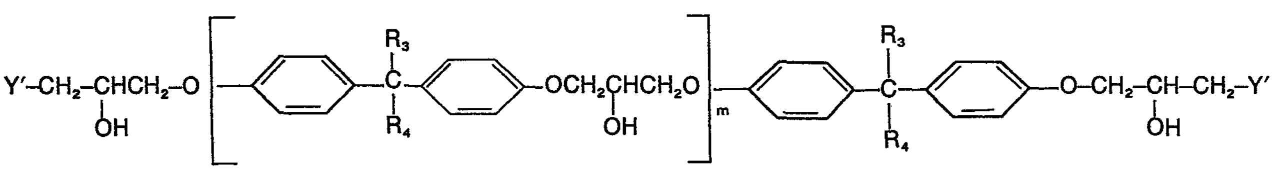

dans laquelle Y′ représente un radical répondant à l'une des formules:

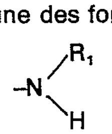
et
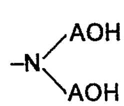

3. Application des composés selon la revendication 1 comme dispersants.

4. Application des composés selon la revendication 1 pour la préparation de dispersions aqueuses de pigments.

5. Dispersions de pigments, de colorants, d'azureurs optiques, de produits phytosanitaires et de produits anti-parasitaires, caractérisées en ce qu'elles contiennent un composé de formule 1 selon la revendication 1.